(19) Europäisches Patentamt / European Patent Office / Office européen des brevets

(11) **EP 4 187 306 B1**

(12) **EUROPÄISCHE PATENTSCHRIFT**

(45) Veröffentlichungstag und Bekanntmachung des Hinweises auf die Patenterteilung:
**13.11.2024  Patentblatt 2024/46**

(21) Anmeldenummer: **22193806.1**

(22) Anmeldetag: **05.09.2022**

(51) Internationale Patentklassifikation (IPC):
***G02B 21/36*** (2006.01)

(52) Gemeinsame Patentklassifikation (CPC):
**G02B 21/365; G02B 21/367**

(54) **VERFAHREN ZUM AUSWERTEN VON MESSDATEN EINES LICHTFELDMIKRO-SKOPS UND VORRICHTUNG ZUR LICHTFELDMIKROSKOPIE**

METHOD FOR EVALUATING MEASUREMENT DATA FROM A LIGHT FIELD MICROSCOPE, AND APPARATUS FOR LIGHT FIELD MICROSCOPY

PROCEDE D'EVALUATION DE DONNEES DE MESURE D'UN MICROSCOPE A CHAMP LUMINEUX ET DISPOSITIF DE MICROSCOPIE A CHAMP LUMINEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2021   DE 102021123148**

(43) Veröffentlichungstag der Anmeldung:
**31.05.2023   Patentblatt 2023/22**

(73) Patentinhaber: **Carl Zeiss Microscopy GmbH 07745 Jena (DE)**

(72) Erfinder:
• SCHWEDT, Daniel
  7745 Jena (DE)
• ANHUT, Tiemo
  7745 Jena (DE)

(74) Vertreter: **Schiffer, Axel Martin Rundfunkplatz 2 80335 München (DE)**

(56) Entgegenhaltungen:
**US-A1- 2017 168 284     US-A1- 2017 205 615**

**Beschreibung**

Die Erfindung betrifft in einem ersten Gesichtspunkt ein Verfahren zum Auswerten von Messdaten eines Lichtfeldmikroskops. In einem zweiten Gesichtspunkt betrifft die Erfindung eine Vorrichtung zur Lichtfeldmikroskopie.

Eine gattungsgemäße Vorrichtung zur Lichtfeldmikroskopie beinhaltet mindestens folgende Komponenten: ein Lichtfeldmikroskop mit einer Lichtquelle zum Aussenden von Anregungslicht, mit einem Beleuchtungsstrahlengang mit mindestens einem Mikroskopobjektiv zum Leiten des Anregungslichts auf oder in eine Probe, mit einem zweidimensional ortsauflösenden Detektor zum Nachweis von von der Probe abgestrahltem Licht, mit einem Detektionsstrahlengang mit mindestens einem Mikrolinsenarray zum Leiten von von der Probe abgestrahltem Licht auf den Detektor und mit einer Steuer- und Auswerteeinheit zum Ansteuern der Lichtquelle und des Detektors und zum Auswerten der von dem Detektor erhaltenen Messdaten.

In der biomedizinischen Forschung werden zunehmend Prozesse in Organen, Geweben und Organismen untersucht. Hierbei interessiert beispielsweise die neuronale Reaktion auf Reize oder die Ausbreitung von Impulsen in Muskelgewebe. Notwendig sind dabei primär nicht strukturelle Untersuchungen mit bester Auflösung, sondern vielmehr die schnelle Akquise dreidimensionaler Bilddaten. Gemessen wird in diesen Bilddaten dann eine zeitliche und/oder räumliche relative Änderung von fluoreszierenden Signalen, also

$$\Delta F/F_0$$

Darin ist $F_0$ eine zu einem ersten Zeitpunkt oder an einem ersten Punkt im Raum gemessene Intensität und $\Delta F$ ist die Änderung des Signals vom ersten zum zweiten Zeitpunkt oder vom ersten zu einem zweiten Punkt im Raum. Das eigentliche Bild ist nur noch Datenquelle und dient in der Regel keiner weiteren Analyse. Da zum Beispiel neuronale Strukturen während der schnellen Volumenaufnahme im Wesentlichen ortsfest bleiben, kann die schnelle zeitliche Information bestimmten Bereichen der neuronalen Struktur zugeordnet werden, wenn beispielsweise am Beginn oder einem anderen Zeitpunkt der Messung eine Aufnahme der Struktur erfolgt.

Zur schnellen Bildaufnahme kommt zunehmend die Lichtfeldmikroskopie (LFM) zum Einsatz. Die Lichtfeldmikroskopie hat den Vorteil, dass aus einer einzigen Kameraaufnahme, die in der Regel innerhalb von Bruchteilen von Sekunden erfolgt, ein Volumen mit einigen zehn bis hundert Mikrometern rekonstruiert werden kann. Bei der Lichtfeldmikroskopie sind verschiedene Ausführungsformen möglich. Bei der sogenannten Ortsraum-Lichtfeldmikroskopie wird in einer zur Objektebene konjugierten Ebene im Detektionsstrahlengang ein Mikrolinsenarray (MLA) angeordnet. In dessen hinterer Brennebene, die dann zur hinteren Brennebene des Mikroskopobjektivs (BFP, back focal plane) optisch konjugiert ist, wird dann mit einem Kamerasensor detektiert.

Eine für die Mikroskopie intuitivere Methode ist die sogenannte Fourier- Lichtfeldmikroskopie, bei der das Mikrolinsenarray (MLA) in einer zur Pupillenebene des Objektivs konjugierten Ebene angeordnet ist. Die Detektion erfolgt wieder in der hinteren Brennebene (BFP) des Mikrolinsenarrays. In diesem Fall werden reale Abbilder des Probenvolumens als Teilbilder innerhalb des aufgenommenen Kamerabildes erfasst, die aber jeweils zu unterschiedlichen parallaktischen Blickrichtungen auf die Probe gehören. Wegen der Parallaxe bewirkt eine - gedachte - axiale Verschiebung eines emittierenden Fluoreszenzmoleküls im Objektraum eine von der Position der jeweils betrachtenden Mikrolinse abhängige laterale Verschiebung des Signals auf dem Kamerasensor.

Zur Rekonstruktion der strukturellen Volumeninformation aus den Rohdaten stehen verschiedene Algorithmen zur Verfügung. Ein erster Algorithmus separiert zunächst alle Teilbilddaten aus dem Kamerabild zu einem Bildstapel, wobei jedes Teilbild dieses Stapels einer Blickrichtung auf die Probe entspricht. Um den Bildinhalt einer bestimmten axialen Probenebene zu berechnen, wird nun jedes Teilbild dieses Stapels um die für die gewählte axiale Ebene erwartete parallaktische Verschiebung verschoben. Danach wird der so erzeugte Stapel zu einem Bild einer z-Ebene aufsummiert. Um ein dreidimensionales Bild zu erhalten, auch als 3D-Stapel bezeichnet, wird dieses Verfahren dann für die weiteren Ebenen wiederholt und aus Bildern für die einzelnen z-Ebenen wird dann ein dreidimensionales Bild zusammengesetzt. Der Nachteil dieses Verfahrens, das auch als Shift&Sum-Verfahren (S&S) bezeichnet wird, ist, dass Detailinformationen, insbesondere bei dicht besetzten Proben, stark von Hintergrund überlagert sein können.

Eine weitere Methode nutzt einen Joint Deconvolution Ansatz (jDCV). Hierzu ist die Kenntnis der Punktverteilungsfunktion (PSF) zu jeder Mikrolinse notwendig und die Rechenzeiten sind deutlich länger als bei dem Shift&Sum-Verfahren. Dafür erhält man ein deutlich kontrastreicheres Bild. Der Nachteil dieses Verfahrens ist jedoch, dass aufgrund seines nichtlinearen Charakters Intensitätsverhältnisse eventuell nicht erhalten bleiben.

Sowohl das Shift&Sum-Verfahren als auch das jDCV-Verfahren dienen dazu, die dreidimensionale Bildinformation bereitzustellen und ein möglichst gutes strukturelles Abbild der Probe zu liefern.

US 2017/0205615 A1 betrifft ein Verfahren und eine Vorrichtung zur Lichtfeldmikroskopie mit gesteigerter Auflösung der dreidimensionalen Bildgebung. Bei einem ersten Ansatz wird dabei die Bildauflösung erhöht durch Modellierung der Lichtstreuung, die in einem Abbildungsziel auftritt, und durch Verwendung des Modells bei der Entfaltung der Lichtfeldinformation. Bei einem zweiter Ansatz wird die Auflösung verbessert durch zusätzliche Verwendung eines zweiten Bildgebungsmodus, wie Zwei-Photonen-, Mehrphotonen- oder konfokale Mikroskopie.

Als eine **Aufgabe** der Erfindung kann angesehen werden, ein Verfahren und eine Vorrichtung bereitzustellen, die die Untersuchung von lokalen dynamischen Prozessen mit hoher zeitlicher Auflösung und gutem Signal-zu-Rausch-Verhältnis ermöglichen.

Diese Aufgabe wird durch das Verfahren mit den Merkmalen des Anspruchs 1 und durch die Vorrichtung mit den Merkmalen des Anspruchs 15 gelöst.

Vorteilhaften Varianten des erfindungsgemäßen Verfahrens und bevorzugte Ausgestaltungen der erfindungsgemäßen Vorrichtung werden im Folgenden, insbesondere im Zusammenhang mit den abhängigen Ansprüchen und den Figuren, erläutert.

Bei dem erfindungsgemäßen Verfahren zum Auswerten von Messdaten eines Lichtfeldmikroskops werden folgende Verfahrensschritte durchgeführt:

a) in einer Probe wird mindestens eine zu analysierende Probenposition ausgewählt;

b) mit einem Lichtfeldmikroskop werden in einer Abfolge von Aufnahmezeitpunkten Bilder der Probe aufgenommen, die jeweils einen Satz von Teilbildern umfassen;

c) in den Teilbildern der im Schritt b) aufgenommenen Bilder werden die Positionen bestimmt, die den ausgewählten Probenpositionen entsprechen;

d) mindestens aus einigen der Teilbilder werden an den im Teilschritt c) bestimmten Positionen die Bildsignale extrahiert;

e) für einen bestimmten Aufnahmezeitpunkt wird ein integriertes Signal erhalten, indem die im Schritt d) für eine bestimmte Position aus Teilbildern dieses Aufnahmezeitpunkts extrahierten Bildsignale zu dem integrierten Signal aufintegriert werden; und

f) ein zeitlicher Verlauf des integrierten Signals wird erhalten, indem Schritt e) für eine Mehrzahl von Aufnahmezeitpunkten durchgeführt wird.

Die Vorrichtung zur Lichtfeldmikroskopie der oben angegebenen Art ist erfindungsgemäß dadurch weitergebildet, dass die Steuer- und Auswerteeinheit dazu eingerichtet ist,

A) die Lichtquelle und den Detektor zur Aufnahme von Bildern der Probe in einer Abfolge von Aufnahmezeitpunkten anzusteuern, wobei die Bilder jeweils einen Satz von Teilbildern umfassen;

B) in den Teilbildern der im Schritt A) aufgenommenen Bilder Positionen zu bestimmen, die von einem Benutzer oder maschinell in der Probe ausgewählten Probenpositionen entsprechen;

C) mindestens aus einigen der Teilbilder an den im Teilschritt B) bestimmten Positionen die Bildsignale zu extrahieren;

D) für einen bestimmten Aufnahmezeitpunkt ein integriertes Signal zu generieren, durch Aufintegrieren der im Schritt C) für eine bestimmte Position aus Teilbildern dieses Aufnahmezeitpunkts extrahierten Bildsignale und;

E) den Schritt D) für eine Mehrzahl von Aufnahmezeitpunkten durchzuführen.

Das erfindungsgemäße Verfahren und die erfindungsgemäße Vorrichtung eignen sich grundsätzlich für jede Art von Proben, die zugänglich sind für die Untersuchung mit Lichtfeldmikroskopie und bei denen dynamische Vorgänge mit hoher Zeitauflösung und gutem Signal-zu-Rausch-Verhältnis untersucht werden sollen. Vor allem eignet sich die Erfindung für die Untersuchung von biologischen Proben, insbesondere von physiologischen Prozessen in lebenden Proben. Beispielsweise können Probenpositionen entlang einer Trajektorie, beispielsweise einer Nervenbahn, betrachtet werden. Man kann dann zum Beispiel untersuchen, wie eine Anregung sich entlang der Nervenbahn fortpflanzt. Auch Bewegungen von Zellpartikeln können untersucht werden. Solche Prozesse werden auch als funktionale Spuren bezeichnet. Das erfindungsgemäße Verfahren und die erfindungsgemäße Vorrichtung sind zum Beispiel auch besonders geeignet zur Untersuchung von Kalziumtransienten.

Bei dem erfindungsgemäßen Verfahren werden bevorzugt die Rohdaten des zweidimensional ortsauflösenden Detektors ausgewertet. Dadurch werden hohe Zeitauflösungen möglich.

Als wesentliche Erkenntnisse der vorliegenden Erfindung kann angesehen werden, dass es zur Untersuchung von dynamischen Prozessen mit hoher zeitlicher Auflösung und gutem Signal-zu-Rausch-Verhältnis nicht notwendig ist, die Bilder des Lichtfeldmikroskops vollständig zu rekonstruieren und dass es vielmehr ausreicht, die Daten des Lichtfeldmikroskops nur an interessierenden Positionen auszuwerten.

Weil bei der vorliegenden Erfindung die relevanten Daten direkt aus den Rohdaten extrahiert werden können, wird als ein wesentlicher Vorteil erreicht, dass im Vergleich zu Shift&Sum-Verfahren ein besserer Kontrast erreicht wird und im Vergleich zu Joint-Deconvolution-Verfahren ein deutlicher Zeitgewinn besteht. Zudem ist es ein deutlicher Vorteil, von den unbehandelten Rohdaten auszugehen. Diese sind sicherer quantitativ auswertbar. Bleibt man im linearen Empfindlichkeitsbereich der Kamera, so sind die Änderungen linear. Dies kann bei prozessierten Daten nicht in jedem Fall garantiert werden.

Die erfindungsgemäße Vorrichtung kann zur Durchführung der erfindungsgemäßen Verfahren eingerichtet sein.

Die Lichtfeldmikroskopie kann als Fluoreszenzmikroskopie durchgeführt werden und als Lichtquellen werden bevorzugt Laser verwendet, die zur Fluoreszenzanregung der Farbstoffe, mit denen die zu untersuchenden Proben präpariert wurden, geeignet sind.

Als zweidimensional ortsauflösende Detektoren können grundsätzlich bekannte Kameras, wie CMOS-, CCD- oder SPAD-Kameras, zum Einsatz kommen.

Die mit dem Lichtfeldmikroskop aufgenommenen Bilder umfassen jeweils einen Satz von Teilbildern. Die Teilbilder sind diejenigen Bilder, die von einer einzelnen Mikrolinse des Mikrolinsenarrays auf dem zweidimensional ortsauflösenden Detektor erzeugt werden.

Bei einer besonders vorteilhaften Ausführungsform der erfindungsgemäßen Vorrichtung ist das Mikrolinsenarray in einer zur hinteren Pupille des Mikroskopobjektivs optisch konjugierten Ebene angeordnet. Die zu den einzelnen Mikrolinsen gehörenden Teilbilder entsprechen dann Bildern der Probe aus unterschiedlichen parallaktischen Winkeln. Bei dieser als Fourier-Lichtfeldmikroskopie bezeichneten Variante sind die Teilbilder anschaulich verständlich. Die vorliegende Erfindung ist aber nicht auf die Fourier-Lichtfeldmikroskop beschränkt.

Vielmehr kann für das erfindungsgemäße Verfahren und die erfindungsgemäße Vorrichtung die als Ortsraum-Lichtfeldmikroskopie bezeichnete Variante zum Einsatz kommen, bei der das Mikrolinsenarray in einer zu einer Ebene der Probe optisch konjugierten Ebene angeordnet ist.

Im Hinblick auf das Auswählen der zu analysierenden Probenpositionen besteht große Freiheit. Beispielsweise kann/können die zu analysierende(n) Probeposition(en) von einem Benutzer und/oder maschinell ausgewählt werden aus einem zweidimensionalen oder dreidimensionalen Übersichtsbild der Probe. Weiterhin ist möglich, dass die zu analysierende(n) Probeposition(en) von einem Benutzer ausgewählt wird/werden anhand einer visuellen Beobachtung der Probe mit einem Okular. Alternativ oder ergänzend kann/können die zu analysierende(n) Probeposition(en) von einem Benutzer und/oder maschinell ausgewählt werden anhand eines mit einem EDOF-Verfahren (EDOF=Enhanced Depth Of Focus: verbesserte oder erhöhte Schärfentiefe) oder eines mit einem Objektiv mit großer Schärfentiefe aufgenommenen zweidimensionalen Kamerabilds.

Wichtig ist auch, dass in dem Fall, dass die zu analysierende(n) Probeposition(en) von einem Benutzer und/oder maschinell anhand von Bildern der Probe ausgewählt wird/werden, diese Bilder nicht unmittelbar vor der Durchführung des erfindungsgemäßen Verfahrens aufgenommen oder erstellt werden müssen.

Vielmehr kann das erfindungsgemäße Verfahren als nachgelagerte Datenverarbeitung von zuvor aufgenommenen, mithin vorhandenen, Bilddaten durchgeführt werden.

Die Analyse gemäß dem erfindungsgemäßen Verfahren kann also sowohl unmittelbar nach Aufnahme der Bilddaten erfolgen als auch als reine Nachprozessierung (post processing). Für die Erzeugung derjenigen zweidimensionalen oder dreidimensionalen Bilder, anhand derer die zu analysierenden Positionen ausgewählt werden, kommen grundsätzlich alle bekannten Methoden zur, gegebenenfalls auch vergleichsweise langsamen, Aufnahme der zwei- oder dreidimensionalen Strukturinformation einer Probe in Betracht.

Ein zwei- oder dreidimensionales mikroskopisches Übersichtsbild der Probe ist ein mikroskopisches Bild der zu untersuchenden Probe in zwei beziehungsweise allen drei Raumrichtungen.

Ein Übersichtsbild der Probe kann beispielsweise mit einem Laser-Scanning-Mikroskop gewonnen werden. Dreidimensionale Bilder werden mit Laser-Scanning-Mikroskop typischerweise als z-Stapel (z-Stack) erhalten, d. h. als ein Satz von Bildern von Ebenen der Probe an unterschiedlichen Positionen der in z-Richtung verlaufenden optische Achse.

Bei der erfindungsgemäßen Vorrichtung kann zur Aufnahme des dreidimensionalen Übersichtsbilds der Probe zweckmäßig ein Modul zur Laser-Scanning-Mikroskopie vorhanden sein.

Alternativ oder ergänzend kann ein dreidimensionales Übersichtsbild der Probe mit dem Lichtfeldmikroskop gewonnen werden, insbesondere durch Rekonstruktion eines Satzes von mit dem Lichtfeldmikroskop erhaltenen Teilbildern. Zusätzliche apparative Komponenten, wie beispielsweise ein Modul zur Laser-Scanning-Mikroskopie, sind dann nicht unbedingt notwendig.

Die Rekonstruktion des dreidimensionalen Übersichtsbilds kann gewonnen werden mit einem Entfaltungsalgorithmus unter Verwendung der Punktverteilungsfunktionen der Mikrolinsen eines Multilinsenarrays des Lichtfeldmikroskops.

Solche Verfahren werden auch als Joint-Deconvolution-Verfahren oder jDCV-Verfahren bezeichnet. Joint-Deconvolution-Verfahren sind im Hinblick auf den Rechenaufwand vergleichsweise aufwändig, liefern aber kontrastreiche Bilder.

Alternativ oder ergänzend kann die Rekonstruktion des dreidimensionalen Übersichtsbilds erhalten werden durch Berechnung des Bildinhalts für die einzelnen axialen Probenebenen, wobei der Bildinhalt einer bestimmten axialen Probenebene berechnet wird, indem jedes Teilbild im Satz von Teilbildern um eine für die axiale Probenebene erwartete parallaktische Verschiebung verschoben wird, und wobei der Satz der verschobenen Teilbilder aufsummiert wird. Das dreidimensionale Übersichtsbild wird aus den Bildinhalten für die einzelnen axialen Probenebenen zusammengesetzt.

Solche Verfahren werden als Shift&Sum-Ver-

7 EP 4 187 306 B1 8

fahren bezeichnet. Bei diesen Verfahren ist der Rechenaufwand im Vergleich zu Joint-Deconvolution-Verfahren geringer, allerdings ist die Bildqualität häufig weniger gut, weil, insbesondere bei dicht besetzten Proben, Bilddetails stark von Hintergrund überlagert werden.

Mit dem Begriff der Probenposition sind diejenigen auszuwählenden Orte in der Probe gemeint, an denen dynamische Prozesse, beispielsweise eine neuronale Reaktion auf Reize oder die Ausbreitung von Impulsen in Muskelgewebe, aufgezeichnet werden sollen. Eine Probenposition beinhaltet deshalb immer einen bestimmten Ort in der Probe und ein maschinell oder von einem Benutzer, gegebenenfalls maschinell assistiert, auszuwählendes mikroskopisches Volumen an dem betreffenden Ort. Das mikroskopische Volumen kann lineare Ausdehnungen in der Größenordnung typischerweise im einstelligen und zweistelligen Mikrometerbereich haben. Für die auszuwertenden Bilder bedeutet das, dass für eine bestimmte Probenposition immer eine Mehrzahl von Pixeln, nämlich diejenigen Pixel, die in dem zu der Probenposition gehörenden Volumen liegen, auszuwerten sind.

Mit dem Schritt des Auswählens von einer oder mehreren zu analysierenden Probenpositionen ist derjenige Verfahrensschritt gemeint, bei dem das dreidimensionale Übersichtsbild im Hinblick auf interessierende Strukturen untersucht wird und diejenigen Probenpositionen, an denen sich solche interessierenden Strukturen befinden, für die weitere Untersuchung ausgewählt werden.

Mit dem Begriff einer Abfolge von Aufnahmezeitpunkten ist zunächst gemeint, dass eine Mehrzahl von Bildern zeitlich nacheinander aufgenommen werden. Die Frequenz der Aufnahmezeitpunkte ist dabei einerseits apparativ nach oben beschränkt. Soweit apparativ möglich, wird die Frequenz der Aufnahmezeitpunkte bevorzugt an die zeitliche Struktur des zu untersuchenden, insbesondere biologischen Prozesses, beispielsweise der Erregung eines Axons, angepasst. Die Zeitabstände zwischen den einzelnen Aufnahmezeitpunkten können variieren.

Die Probenpositionen in dem dreidimensionalen Übersichtsbild sind Positionen in den Teilbildern des Lichtfeldmikroskops eindeutig zugeordnet, wobei die Zuordnungsvorschrift festgelegt ist durch die optischen Parameter des Detektionsstrahlengangs des Lichtfeldmikroskops, insbesondere also auch durch die geometrischen Parameter des verwendeten Multilinsenarrays. Diese Zuordnungsvorschrift kann beispielsweise aus den im Shift&Sum-Verfahren angewandten parallaktischen Verschiebungen abgeleitet werden.

Der Verfahrensschritt c) des Bestimmens derjenigen Positionen in den Teilbildern, die den im Übersichtsbild ausgewählten Probenpositionen entsprechen, beinhaltet also das Aufsuchen der jeweiligen Positionen über die durch die optischen Parameter des Detektionsstrahlengangs definierte Zuordnungsvorschrift.

Bei vorteilhaften Varianten des erfindungsgemäßen Verfahrens werden die Positionen in den Teilbildern der Lichtfelddaten berechnet, die mit den im dreidimensionalen Übersichtsbild ausgewählten und zu analysierenden Probenpositionen korrespondieren.

Grundsätzlich wird die Erfindung verwirklicht, wenn die Teilbilder nur an einer Position ausgewertet werden. Bei bevorzugten Varianten des erfindungsgemäßen Verfahrens werden die Bilder der Abfolge von Aufnahmezeitpunkten jeweils an einer Vielzahl von Positionen gemäß den Schritten a) bis f) ausgewertet. Beispielsweise können die Teilbilder an Positionen entlang einer Nervenbahn in einer lebenden Probe ausgewertet werden.

Die zu analysierenden Probenpositionen können in dem dreidimensionalen Übersichtsbild grundsätzlich durch einen Benutzer, etwa anhand einer grafischen Darstellung des dreidimensionalen Übersichtsbilds als z-Stapel auf einem Computermonitor, ausgewählt werden. Alternativ oder ergänzend kann bei weiteren vorteilhaften Varianten die Auswahl von zu analysierenden Probenpositionen auch von Rechneralgorithmen unterstützt werden oder vollständig automatisch durch eine Auswerteeinheit erfolgen.

Beispielsweise können von einem Benutzer ausgewählte Probenpositionen zusammen mit einem Satz von Teilbildern einem Convolutional Neural Network übergeben werden, welches bei nachfolgenden Ausführungen des Verfahrens dem Benutzer eine Vorauswahl von zu analysierenden Probenpositionen vorschlägt. Es ist zu erwarten, dass ein Experiment vielfach ausgeführt wird und dass sich die Probenstruktur in den verschiedenen Ausführungen des Experimentes stark ähnelt. Demzufolge sind Voraussagen über die zu treffende Auswahl an zu analysierenden Positionen bereits nach einigen zehn Durchläufen realistisch.

Ebenso kann vorgesehen sein, dass die Bilddaten des dreidimensionalen Übersichtsbilds und/oder der Bilder des Lichtfeldmikroskops maschinell analysiert werden und dass in den Bilddaten nach interessierenden Strukturen, also potentiell zu analysierenden Probenpositionen, gesucht wird.

Bei weiteren vorteilhaften Varianten des erfindungsgemäßen Verfahrens können zur Bildauswertung Algorithmen zum Einsatz kommen, durch die automatisch eine Zuordnung von Bildsignalen zu bestimmten strukturellen Merkmalen erfolgt.

Das erfindungsgemäße Verfahren wird verwirklicht, wenn gemäß dem Verfahrensschritt d) mindestens aus einigen der Teilbilder an den im Teilschritt c) bestimmten Positionen die Bildsignale extrahiert werden. Wenn alle Teilbilder sinnvolle Messdaten enthalten, beispielsweise wenn die interessierenden Strukturen in keinem der Teilbilder andere Strukturen überlappen oder von anderen Strukturen verdeckt werden, können bevorzugt auch aus allen Teilbildern die Bildsignale an den im Teilschritt c) bestimmten Positionen extrahiert werden. Die Messdaten werden dann optimal ausgenutzt und das Signal-zu-Rausch-Verhältnis kann im Vergleich zur Aus-

5

wertung nur einer Auswahl von Teilbildern gesteigert werden. Vor diesem Hintergrund wird man immer bestrebt sein, möglichst alle Teilbilder, die sinnvolle Bilddaten enthalten, auszuwerten.

Diejenigen Teilbilder, aus denen an den im Teilschritt c) bestimmten Positionen die Bildsignale extrahiert werden, können grundsätzlich durch einen Benutzer ausgewählt werden.

Zum Beispiel kann für die Auswahl der Teilbilder, aus denen an den im Teilschritt c) bestimmten Positionen die Bildsignale extrahiert werden, ein Satz von Teilbildern eines mit dem Lichtfeldmikroskop aufgenommenen Bilds der Probe teilweise oder vollständig graphisch, beispielsweise auf einem Computermonitor, dargestellt werden.

Ergänzend oder alternativ kann die Auswahl derjenigen Teilbilder, an denen die Bildsignale extrahiert werden sollen, auch teilweise, beispielsweise assistiert, durch eine Auswerteeinheit oder vollständig automatisch durch eine Auswerteeinheit erfolgen.

Denkbar ist beispielsweise, dass eine Auswerteeinheit einem Benutzer auszuwählende und/oder zu verwerfende Teilbilder vorschlägt.

Das Aufintegrieren der extrahierten Bildsignale zu dem integrierten Signal beinhaltet im einfachsten Fall das Aufsummieren der jeweiligen Bildsignale. Die zu integrierenden Bildsignale können noch mit einer Wichtungsfunktion gewichtet werden, die beispielsweise Signale von Pixeln aus dem Zentrum eines betrachteten Volumens, beispielsweise eines Ellipsoids, stärker gewichten als Signale vom Rand des betrachteten Volumens.

Ein zeitlicher Verlauf des integrierten Signals wird erhalten, indem Schritt e) für eine Mehrzahl von Aufnahmezeitpunkten durchgeführt wird.

Bei bevorzugten Varianten des erfindungsgemäßen Verfahrens können in einer graphischen Darstellung, insbesondere von Ausschnitten, der Teilbilder Integrationsbereiche zur Berechnung der integrierten Signale graphisch definiert werden. Dieses kann durch einen Benutzer interaktiv und insbesondere unterstützt durch einen Segmentierungsalgorithmus erfolgen.

Beispielsweise kann ein Benutzer in den dargestellten extrahierten Signalen einen Integrationsbereich zur Berechnung eines Signals graphisch definieren, indem, etwa mit einer Ellipse, der zu integrierende Bereich umrandet wird.

Es ist auch möglich, dass die Definition der Integrationsbereiche zur Berechnung der integrierten Signale vollautomatisch durch einen Segmentierungsalgorithmus, insbesondere auch nicht grafisch, erfolgt.

Zweckmäßig kann auch von den zu einer bestimmten Position in Schritt e) ermittelten integrierten Signalen ein Minimalwert oder ein Startwert, insbesondere der für die ausgewerteten Bilder der Abfolge von Aufnahmezeitpunkten erhaltene minimale Wert des integrierten Signals oder das für das zeitlich erste Bild erhaltene integrierte Signal, abgezogen werden. Alternativ kann das integrierte Signal durch den Minimalwert oder den Startwert dividiert werden.

Ein zeitlicher Verlauf des integrierten Signals, auch bezeichnet als Signalspur, kann für mindestens eine, bevorzugt für mehrere und insbesondere für jede ausgewertete Position graphisch dargestellt werden.

Möglich ist auch, dass die Messdaten von auszuwählenden Pixeln korreliert werden, um eine höhere Signalintensität gegenüber dem Rauschen zu erzielen.

Bei lebenden biologischen Proben kann es, beispielsweise durch den Herzschlag oder die Atmung eines untersuchten lebenden Tiers, etwa einer Maus, zu Artefakten in den Bilddaten kommen.

Mit den im Folgenden beschriebenen Weiterbildungen des erfindungsgemäßen Verfahrens können solche Artefakte festgestellt und korrigiert werden.

Bei einer bevorzugten Variante des erfindungsgemäßen Verfahrens kann eine zeitlich variierende Verschiebung von zu unterschiedlichen Aufnahmezeitpunkten aufgenommenen Bildern der Probe festgestellt werden, indem die zu unterschiedlichen Aufnahmezeitpunkten aufgenommenen Bilder miteinander verglichen werden.

Vorteilhaft können insbesondere zeitlich unmittelbar aufeinanderfolgende, Bilder verglichen werden.

Beispielsweise kann für den Vergleich von zu unterschiedlichen Aufnahmezeitpunkten aufgenommenen Bildern für die zu vergleichenden Bilder eine räumliche Korrelation berechnet werden.

Grundsätzlich können stark abweichende, etwa stark verschobene, und insoweit nicht passende Bilder einfach aus der Zeitreihe der auszuwertenden Bilder entfernt werden, sodass nur zueinander passende Bilder ausgewertet werden. Allerdings werden dadurch, möglicherweise in erheblichem Umfang, Messdaten verschenkt.

Aus einer räumlichen Korrelation können im Prinzip auch Richtung und Größe einer Verschiebung der Inhalte der miteinander korrelierten Bilder bestimmt werden. Es kann also ein Verschiebevektor ermittelt werden, mit welchem die Bilder aufeinander geschoben werden können, sodass die so aufeinander geschobenen Bilder wieder gemeinsam ausgewertet werden können.

Bei solchen Verfahren wird für mindestens einen Aufnahmezeitpunkt, insbesondere für mehrere und insbesondere für jeden Aufnahmezeitpunkt, für ein zu diesem Aufnahmezeitpunkt aufgenommenes Bild ein Verschiebevektor relativ zu einem Referenzbild, beispielsweise dem letzten vor dem betreffenden Aufnahmezeitpunkt aufgenommenen Bild, ermittelt, und der Satz von Teilbildern des Bilds wird vor der Weiterverarbeitung jeweils durch den ermittelten Verschiebevektor korrigiert.

Die Kompensierung von Verschiebungen ist schneller möglich, wenn für die Analyse von zeitlich variierenden Verschiebungen von zu unterschiedlichen Aufnahmezeitpunkten aufgenommenen Bildern der Probe jeweils nur eine Auswahl von günstigen Teilbildern, insbesondere von weniger als zehn, bevorzugt weniger als fünf und besonders bevorzugt zwei günstigen Teilbildern, ausgewertet wird.

Beispielsweise kann bei zu unterschiedlichen Aufnahmezeitpunkten aufgenommenen Bildern jeweils das zentrale Teilbild analysiert werden, um Verschiebungen lateral zur optischen Achse zu festzustellen, und ein Teilbild einer auf einem äußeren Ring, insbesondere am Rand, des Multilinsenarrays liegenden Linse kann analysiert werden, um axiale Verschiebungen, insbesondere Verschiebungen parallel zur optischen Achse, zu erfassen.

Weitere Vorteile und Eigenschaften der vorliegenden Erfindung werden im Folgenden mit Bezug auf die beigefügten Figuren beschrieben. Darin zeigt:

Figur 1: eine schematische Übersicht über ein erfindungsgemäßes Lichtfeldmikroskop;

Figur 2: ein Beispiel eines mit dem Lichtfeldmikroskop aufgenommenen Satzes von Teilbildern; und

Figur 3: Ausschnitte aus den Teilbildern der Figur 2 mit ausgewählten Positionen.

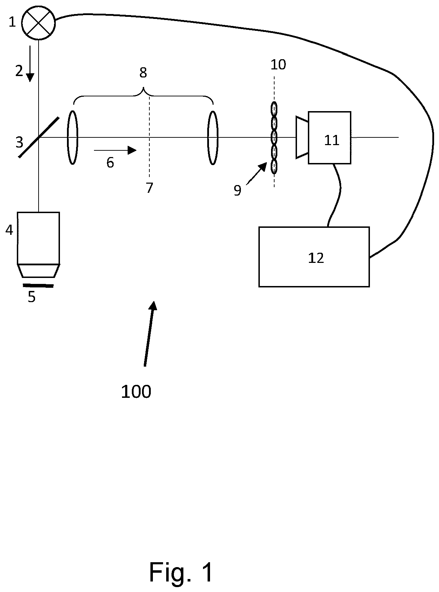

Ein Beispiel einer erfindungsgemäßen Vorrichtung, die zur Durchführung des erfindungsgemäßen Verfahrens eingerichtet ist, wird mit Bezug auf Figur 1 erläutert. Die dort gezeigte Vorrichtung beinhaltet ein Lichtfeldmikroskop 100, das als wesentliche Komponenten aufweist: eine Lichtquelle 1, typischerweise einen oder mehrere Laser, zum Aussenden von Anregungslicht 2, einen Beleuchtungsstrahlengang mit mindestens einem Mikroskopobjektiv 4 zum Leiten des Anregungslichts 2 auf oder in eine Probe 5, einen zweidimensional ortsauflösenden Detektor 11 zum Nachweis von von der Probe 5 abgestrahltem Licht 6 und einen Detektionsstrahlengang mit mindestens einem Mikrolinsenarray 9 zum Leiten des von der Probe 5 abgestrahlten Lichts 6 auf den Detektor 11. Der Detektor 11 ist in oder in der Nähe einer Brennebene des Mikrolinsenarrays 9 angeordnet und kann typischerweise eine CMOS-, CCD- oder SPAD-Kamera sein. Das Mikrolinsenarray 9 könnte auch Teil des Objektivs 4 sein und in dessen hinterer Brennebene angeordnet sein.

Schließlich ist zum Ansteuern der Lichtquelle 1 und des Detektors 11 und zum Auswerten der von dem Detektor 11 erhaltenen Messdaten eine Steuer- und Auswerteeinheit 12 vorhanden, bei der es sich insbesondere um einen Rechner grundsätzlich bekannter Natur handeln kann.

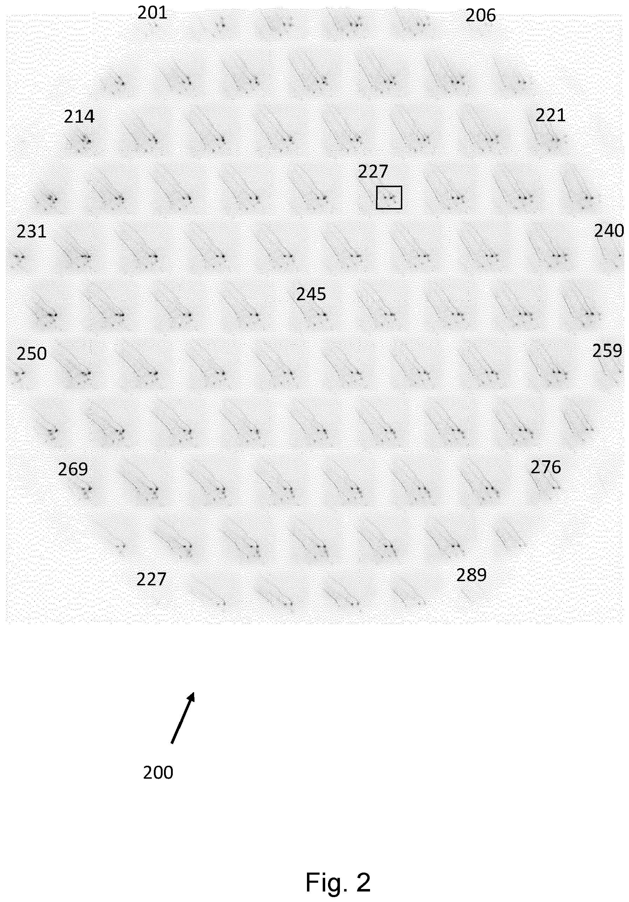

Das von der Lichtquelle 1 ausgesendete Licht 2, insbesondere Anregungslicht für Fluoreszenzfarbstoffe, mit denen die Probe 5 präpariert ist, gelangt durch einen dichroitischen Strahlteiler 3 zum Mikroskopobjektiv 4 und wird von diesem in eine Probenebene auf oder in der Probe 5 fokussiert. Von der Probe 5 abgestrahltes Emissionslicht, insbesondere von Fluoreszenzfarbstoffen abgestrahltes Fluoreszenzlicht, gelangt über das Mikroskopobjektiv 4 zurück auf den dichroitischen Strahlteiler 3 und wird an diesem reflektiert in Richtung einer Relayoptik 8. Die Relayoptik 8 besteht aus zwei teleskopartig zueinander angeordneten Linsen. An der Position 7 befindet sich eine Zwischenbildebene, also eine zur Probenebene optisch konjugierte Ebene. Nach Durchtritt durch die Relayoptik 8 gelangt das Emissionslicht auf ein Mikrolinsenarray 9, welches in einer zur hinteren Brennebene des Mikroskopobjektivs 4 (Objektivpupille BFP) optisch konjugierten Ebene angeordnet ist. Die einzelnen Linsen des Mikrolinsenarrays 9 generieren auf dem in einer Brennebene des Mikrolinsenarrays 9 angeordneten Detektor 11 Teilbilder 201,..,289 (siehe Figur 2), die jeweils Einzelbildern der Probe 5 aus unterschiedlichen Winkeln, genauer: unterschiedlichen Parallaxewinkeln, zeigen. Ein mit dem Lichtfeldmikroskop 100 aufgenommenes Bild 200 umfasst also jeweils einen Satz von Teilbildern 201,..,289 (siehe Figur 2).

Bei der in Figur 1 gezeigten Anordnung mit dem in einer Pupillenebene angeordneten Mikrolinsenarray 9 handelt es sich um einen Aufbau zur Fourier-Lichtfeldmikroskopie. Alternativ wäre auch die sogenannte Ortsraum-Lichtfeldmikroskopie für die Verwirklichung der Erfindung möglich, bei der ein Mikrolinsenarray in einer zur Objektebene (statt zur hinteren Brennebene des Mikroskopobjektivs 4) optisch konjugierten Ebene im Detektionsstrahlengang angeordnet ist. Die mit der Ortsraum-Lichtfeldmikroskopie erhaltene Rohbildinformation hängt mit derjenigen, die man mit der Fourier-Lichtblattmikroskopie gewinnt, über eine Fourier-Transformation zusammen. Das Resultat beider Methoden ist aber am Ende prinzipiell gleich.

Zur Aufnahme eines dreidimensionalen Übersichtsbilds der Probe 5 kann ein in Figur 1 nicht gezeigtes Modul zur Laser-Scanning-Mikroskopie vorhanden sein.

In realen Ausbildungen kann die erfindungsgemäße Vorrichtung 100 zahlreiche weitere optische Komponenten, insbesondere Spiegel, Linsen, Farbfilter und Blenden aufweisen, deren Funktion an sich bekannt ist und die deshalb in der vorliegenden Beschreibung nicht eigens beschrieben werden.

Die Steuer- und Auswerteeinheit 12 ist erfindungsgemäß ist dazu eingerichtet,

A) die Lichtquelle 1 und den Detektor 11 zur Aufnahme von Bildern 200 der Probe 5 in einer Abfolge von Aufnahmezeitpunkten anzusteuern,

B) in den Teilbildern 201,,..,289 (siehe Figur 2) der im Schritt A) aufgenommenen Bilder 200 Positionen a zu bestimmen, die von einem Benutzer oder maschinell in der Probe, insbesondere in einem vorab gewonnenen mikroskopischen Übersichtsbild der Probe, ausgewählten Probenpositionen entsprechen;

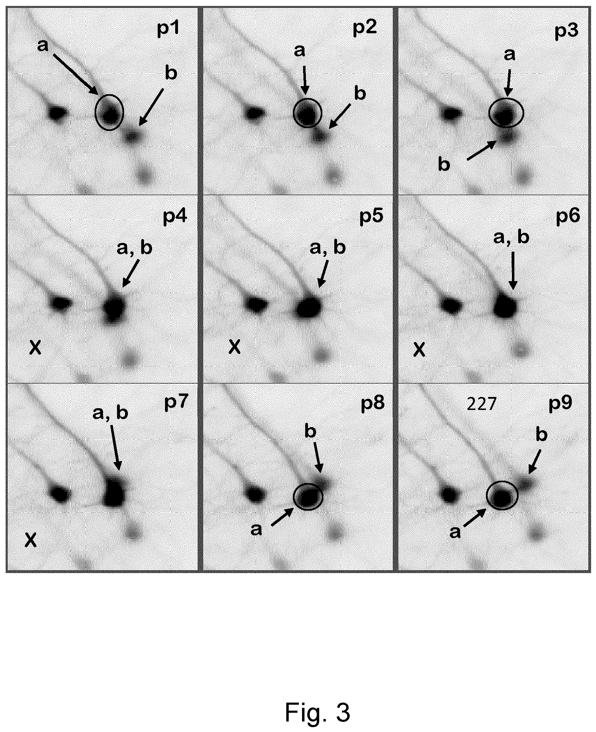

C) mindestens aus einigen der Teilbilder p1, p2, p3, p8, p9 (siehe Figuren 2 und 3) an den im Teilschritt B) bestimmten Positionen a die Bildsignale zu extrahieren;

D) für einen bestimmten Aufnahmezeitpunkt ein integriertes Signal zu generieren, durch Aufintegrieren der im Schritt C) für eine bestimmte Position a aus Teilbildern dieses Aufnahmezeitpunkts extrahierten Bildsignale und;

E) den Schritt D) für eine Mehrzahl von Aufnahmezeitpunkten durchzuführen.

Varianten von erfindungsgemäßen Verfahren zum Auswerten von Messdaten eines Lichtfeldmikroskops werden mit Bezug auf die Figuren 1 bis 3, insbesondere die Figuren 2 und 3, beschrieben.

Zunächst kann bei der hier beschriebenen Variante des erfindungsgemäßen Verfahrens ein dreidimensionales Übersichtsbild der Probe 5 gewonnen werden. Unbedingt notwendig ist das aber, wie oben erläutert, nicht. Das dreidimensionale Übersichtsbild kann z.B. mit einem in Figur 1 nicht dargestellten Laser-Scanning-Mikroskop und/oder durch Rekonstruktion eines Satzes 200 von mit dem Lichtfeldmikroskop 100 erhaltenen Teilbildern 201,..,289 erhalten werden.

Zur Rekonstruktion des dreidimensionalen Übersichtsbilds aus einem Satz 200 von mit dem Lichtfeldmikroskop 100 erhaltenen Teilbildern können die oben beschriebenen Verfahren zum Einsatz kommen.

Sodann wird im Schritt a) in dem dreidimensionalen Übersichtsbild mindestens eine zu analysierende Probenposition ausgewählt. Diese Auswahl der zu analysierenden Probenpositionen kann in dem dreidimensionalen Übersichtsbild durch einen Benutzer und/oder teilweise oder vollständig automatisch durch die Steuer- und Auswerteeinheit 12 erfolgen. Beispielsweise können von einem Benutzer ausgewählte Probenpositionen zusammen mit einem Satz von Teilbildern 201,..,289 einem Convolutional Neural Network (CNN) übergeben werden, welches bei nachfolgenden Ausführungen des Verfahrens dem Benutzer eine Vorauswahl von zu analysierenden Probenpositionen vorschlägt.

Im Schritt b) werden mit dem Lichtfeldmikroskop 100 sodann in einer Abfolge von Aufnahmezeitpunkten Bilder 200 der Probe 5 aufgenommen, die jeweils einen Satz von Teilbildern 201,..,289 umfassen.

Figur 2 zeigt einen Satz von Teilbildern 201-289, die mit einer Vorrichtung der in Figur 1 gezeigten Art aufgenommen wurden. Insgesamt umfasst das in Figur 2 beispielhaft gezeigte Bild 200 der Anzahl der Mikrolinsen in dem Mikrolinsenarray 9 entsprechend 89 Teilbilder. Diese Teilbilder sind in Figur 2 von links oben nach rechts unten durchnummeriert von 201 bis 289, wobei zu einigen Teilbildern deren Nummer angegeben ist. Bei der untersuchten Probe handelt es sich um das tote Gehirn einer Maus Grundsätzlich können und sollen auch lebende Organismen untersucht werden.

In den Bildern der Figuren 2 und 3 bedeuten helle Bereiche geringen und dunkle Bereiche hohen Lichteintrag auf die Kamera.

Im Schritt c) werden dann in den Teilbildern 201,..,289 der im Schritt b) aufgenommenen Bilder 200 diejenigen Positionen a bestimmt, die den im Übersichtsbild ausgewählten Probenpositionen entsprechen. Weil die optischen Parameter des Lichtfeldmikroskops bekannt sind, ist das immer möglich,

Im Schritt d) werden dann mindestens aus einigen der Teilbilder an den im Schritt c) bestimmten Positionen a die Bildsignale extrahiert und im Schritt e) wird für einen bestimmten Aufnahmezeitpunkt ein integriertes Signal erhalten, indem die im Schritt d) für eine bestimmte Position a aus Teilbildern dieses Aufnahmezeitpunkts extrahierten Bildsignale zu dem integrierten Signal aufintegriert werden. Dieses wird mit Bezug auf Figur 3 beschrieben.

Für die Auswahl der Teilbilder, aus denen an den im Schritt c) bestimmten Positionen a die Bildsignale extrahiert werden, kann ein Satz von Teilbildern 201,..,289 eines mit dem Lichtfeldmikroskop 100 aufgenommenen Bilds 200 der Probe 5 teilweise oder vollständig graphisch dargestellt werden.

Figur 3 zeigt Ausschnitte p1 bis p9 aus jeweils unterschiedlichen Teilbildern. Der Ausschnitt p9 ist dabei ein Ausschnitt aus dem Teilbild 227, der in Figur 2 ebenfalls (nicht maßstäblich) gezeigt ist. Mit dem Bezugszeichen a ist eine zu analysierende Position bezeichnet. Konkret handelt es sich um eine Struktur einer Nervenzelle im Gehirn einer Maus. Aus den Ausschnitten p1 bis p9 wird deutlich, dass die Probe von den unterschiedlichen Mikrolinsen aus gesehen jeweils unter einem verschiedenen Parallaxenwinkel erscheint.

In der graphischen Darstellung der Ausschnitte p1, .., p9 der Teilbilder können durch einen Benutzer Integrationsbereiche zur Berechnung der integrierten Signale graphisch definiert werden. Zur Eingrenzung des Bereichs, in dem die Signale aufintegriert werden sollen, ist im Ausschnitt p1 um die Position a eine Umrandung in Form eines Kreises oder einer Ellipse eingezeichnet, die beispielsweise von einem Benutzer so ausgewählt werden kann. Entsprechende Umrandungen sind auch in den Bildausschnitten p2, p3, p8 und p9 eingezeichnet. Eine solche Umrandung kann aber auch Ergebnis eines Segmentierungsalgorithmus sein, der auf das dreidimensionale Übersichtsbild angewandt wurde und wodurch potentiell interessante Probenbereiche gegebenenfalls interaktiv selektierbar werden.

In den Ausschnitten p1, p2, p3, p8 und p9 ist außerdem ersichtlich, dass sich in der Nachbarschaft der Struktur (einem Neuron) an der Position a eine weitere Struktur b befindet, die sich aber je nach Sichtwinkel (Parallaxe) in die Probe in den verschiedenen Bildern relativ zur Position a an einem anderen Ort befindet. Zur korrekten Auswertung der Daten ist es erforderlich, dass nur solche Signale gezählt werden, die tatsächlich von der Struktur an der Position a stammen und nicht solche, die von der Struktur (einem weiteren Neuron) an der Position b herrühren. Beispielsweise sind im Bildausschnitt p8 die Strukturen a und b unmittelbar benachbart zueinander. Eine Trennung, wie im Bildausschnitt p8 durch eine Umrandung eingetragen, scheint aber gerade noch möglich. Bei den Bildausschnitten p4, p5, p6 und p7 sind die Strukturen a und b aber ineinander verschmolzen, das heißt die Strukturen a und b liegen in der zu diesen Bildausschnitten gehörenden Blickrichtung hintereinander. Weil eine Trennung der zu den Strukturen a und b gehörenden Signale nicht mehr möglich ist, werden die Bildausschnitte p4, p5, p6 und p7 verworfen (in diesen Bildausschnitten dargestellt durch X) und diese Teilbilder werden bei der weiteren Auswertung nicht berücksichtigt. Durch das Verwerfen Bildausschnitte p4, p5, p6 und p7 wird einerseits der Kontrast der extrahierten Spuren erhöht und außerdem vermeidet man fehlerhafte zeitliche Signaturen.

Das gegebenenfalls notwendige Verwerfen von Bildinformation kann einerseits interaktiv durch den Anwender geschehen. Andererseits können auch diejenigen Informationen automatisch verworfen werden, die zu zwei sich überlappenden Bildausschnitten gehören, die aus einem Segmentierungsalgorithmus stammen.

Unbedingt notwendig ist das Verwerfen der Daten der Bildausschnitte p4, p5, p6 und p7 aber nicht. Solange die Kamera in einem linearen Bereich arbeitet, kann es auch möglich sein, die Signale wieder zu trennen unter Verwendung des an sich bekannten Verhältnisses der Abstrahlung beider Zellbereiche in den getrennten Teilbildern. Eine solche Trennung wird nur dann nicht mehr möglich sein, wenn Abschattungseffekte durch die jeweils davorliegende Zellstrukturen so stark werden, dass das Verhältnis der Abstrahlung zweier Zellbereiche in separaten Teilbildern nicht mehr erhalten bleibt.

In einer Situation, wo die zu analysierende Position a in sämtlichen Teilbildern frei ist und nicht von Signalen anderer Strukturen überlagert wird, müssen keine Teilbilder verworfen werden und es können vielmehr die Signale aus allen Teilbildern integriert werden. Man wird bestrebt sein, die vorhandenen Messdaten möglichst optimal auszunutzen und deshalb nur solche Teilbilder zu verwerfen, in denen die Signale nicht sinnvoll separiert werden können.

Im Schritt f) schließlich wird ein zeitlicher Verlauf des integrierten Signals erhalten, indem der Schritt e) für eine Mehrzahl von Aufnahmezeitpunkten, insbesondere für alle Aufnahmezeitpunkte der betrachteten Messreihe, durchgeführt wird.

Um vergleichbare Daten zu erhalten, kann von den zu einer bestimmten Position a im Schritt e) bestimmten integrierten Signalen ein Minimalwert oder ein Startwert abgezogen werden oder das integrierte Signal kann durch den Minimalwert oder den Startwert dividiert werden.

Schließlich können die erhaltenen zeitlichen Verläufe des integrierten Signals, die auch als Signalspuren bezeichnet werden, für die ausgewerteten Positionen a graphisch dargestellt werden.

Herzschlag und/oder Atmung der untersuchten Maus können zeitlich variierende Verschiebungen von zu unterschiedlichen Aufnahmezeitpunkten aufgenommenen Bildern 200 der Probe 5 bewirken. Diese Verschiebungen müssen vom eigentlichen Messsignal separiert werden.

Die zu unterschiedlichen Aufnahmezeitpunkten aufgenommenen Bilder 200 können miteinander verglichen werden. Insbesondere kann für die zu vergleichenden Bilder 200 eine räumliche Korrelation berechnet werden.

Die Rohdatenaufnahme über die Fourier-Lichtfeldmikroskopie ermöglicht eine Detektion von Bewegungen ohne die Rekonstruktion der vollen dreidimensionalen Information. Wenn man beispielsweise annimmt, dass die Bewegung des Objektes lateral zur optischen Achse des Objektivs erfolgt, verschiebt sich die Gesamtheit der Strukturen in allen Teilbildern korreliert und zeitgleich um einen ungefähr gleichen Betrag lateral auf dem Sensor. Solch eine zeitlich variierende Verschiebung auf allen Teilbildern lässt sich relativ einfach detektieren, indem bspw. aufeinanderfolgende Bilder räumlich miteinander korreliert werden. Man kann dann die betreffenden Bilder entweder aus der Zeitreihe entfernen oder aber auch alle Teilbilder vor der Weiterverarbeitung durch den ermittelten Verschiebevektor korrigieren.

Für jeden Aufnahmezeitpunkt kann für das zu diesem Aufnahmezeitpunkt aufgenommene Bild 200 ein Verschiebevektor relativ zu einem Referenzbild, beispielsweise dem letzten vor dem betreffenden Aufnahmezeitpunkt aufgenommenes Bild, ermittelt werden und der Satz von Teilbildern des jeweiligen Bilds 200 kann vor der Weiterverarbeitung durch den ermittelten Verschiebevektor korrigiert werden.

Ein schnelleres Verfahren zur Bestimmung der Verschiebevektoren wird erreicht, wenn für die Analyse von zeitlich variierenden Verschiebungen von zu unterschiedlichen Aufnahmezeitpunkten aufgenommenen Bildern 200 der Probe 5 jeweils nur wenige, beispielsweise nur zwei, günstige Teilbilder ausgewertet werden. Zum Beispiel können bei zu unterschiedlichen Aufnahmezeitpunkten aufgenommenen Bildern 200 jeweils nur das zentrale Teilbild 245 und ein Teilbild einer am Rand des Multilinsenarrays 9 liegenden Linse, in Figur 2 etwa eines der Teilbilder 221 oder 240, analysiert werden.

Durch Analyse des zentralen Teilbilds 245 erhält man die Verschiebungen lateral zur optischen Achse und die Analyse eines außenliegenden Teilbilds 221, 240 liefert axiale Verschiebungen, insbesondere Verschiebungen parallel zur optischen Achse. Axiale Verschiebungen führen ebenfalls zu Verschiebungen der Gesamtheit der Strukturen lateral zur Kameraebene, die aber für jede Subapertur unterschiedlich ausfallen. Für eine zentrale Mikrolinse, also eine auf der optischen Achse liegende Mikrolinse, ist die Verschiebung Null. Je weiter die betreffende Mikrolinse von der optischen Achse entfernt ist, umso größer die laterale Verschiebung.

Demzufolge ist es auch möglich, die korrespondierenden Subaperturen zweier aufeinanderfolgender Rohdatenbilder miteinander zu korrelieren. Laterale und axiale Bewegungsartefakte können so automatisch erfasst und korrigiert werden.

Mit der vorliegenden Erfindung werden ein neuartiges Verfahren zum Auswerten von Messdaten eines Lichtfeldmikroskops und eine Vorrichtung zur Lichtfeldmikroskopie bereitgestellt, mit welchen deutliche Verbesserungen bei der Untersuchung von lokalen dynamischen Prozessen mit hoher zeitlicher Auflösung und gutem Signal-zu-Rausch-Verhältnis erreicht werden.

Bezugszeichenliste und verwendete Abkürzungen

| 1 | Lichtquelle (Laser) |
| 2 | Anregungslicht |
| 3 | dichroitischer Strahlteiler |
| 4 | Mikroskopobjektiv |
| 5 | Probe |
| 6 | Emissionslicht |
| 7 | Zwischenbildebene |
| 8 | Relayoptik |
| 9 | Mikrolinsenarray |
| 10 | Fourierebene (optisch konjugiert zu BFP des Mikroskopobjektivs 4) |
| 11 | Detektor (Kamera, in Bildebene) |
| 12 | Auswerteeinheit |
| 100 | Lichtfeldmikroskop |
| 200 | Bild des Lichtfeldmikroskops |
| 201 | Teilbild |
| 227 | Teilbild |
| 245 | zentrales Teilbild |
| 289 | Teilbild |
| a | ausgewählte zu analysierende Position in Teilbild |
| b | zur Position a benachbarte Position |
| p 1 -p9 | Ausschnitte aus verschiedenen Teilbildern |
| X | bedeutet: Bild wird nicht ausgewertet |
| BFP | hintere Objektivpupille (back focal plane) |
| jDCV | Joint Deconvolution-Verfahren |
| LFM | Lichtfeldmikroskop |
| LSM | Laser-Scanning-Mikroskop |
| MLA | Mikrolinsenarray |
| PSF | Punktverteilungsfunktion |
| S&S | Shift&Sum-Verfahren |

**Patentansprüche**

1. Verfahren zum Auswerten von Messdaten eines Lichtfeldmikroskops, bei dem folgende Schritte durchgeführt werden:

a) in einer Probe (5) wird mindestens eine zu analysierende Probenposition ausgewählt;

b) mit einem Lichtfeldmikroskop (100) werden in einer Abfolge von Aufnahmezeitpunkten Bilder (200) der Probe (5) aufgenommen, die jeweils einen Satz von Teilbildern (201,..,289) umfassen;

c) in den Teilbildern (201,..,289) der im Schritt b) aufgenommenen Bilder (200) werden die Positionen (a) bestimmt, die den ausgewählten Probenpositionen entsprechen;

d) mindestens aus einigen der Teilbilder (p1, p2, p3, p8, p9) werden an den im Teilschritt c) bestimmten Positionen (a) die Bildsignale extrahiert;

e) für einen bestimmten Aufnahmezeitpunkt wird ein integriertes Signal erhalten, indem die im Schritt d) für eine bestimmte Position (a) aus Teilbildern dieses Aufnahmezeitpunkts extrahierten Bildsignale zu dem integrierten Signal aufintegriert werden; und

f) ein zeitlicher Verlauf des integrierten Signals wird erhalten, indem Schritt e) für eine Mehrzahl von Aufnahmezeitpunkten durchgeführt wird.

2. Verfahren nach Anspruch 1,

wobei die mindestens eine zu analysierende Probenposition von einem Benutzer aus einem, insbesondere schon vorhandenen, insbesondere zweidimensionalen oder dreidimensionalen, Übersichtsbild der Probe (5) ausgewählt wird; anhand einer Beobachtung der Probe mit einem Okular ausgewählt wird und/oder anhand eines mit einem EDOF-Verfahren oder einem Objektiv mit großer Schärfentiefe gewonnenen 2D-Bilds ausgewählt wird.

3. Verfahren nach Anspruch 2,

wobei das Übersichtsbild der Probe (5) mit einem Laser-Scanning-Mikroskop gewonnen wird oder wobei das Übersichtsbild der Probe (5) mit dem Lichtfeldmikroskop (100) gewonnen wird, insbesondere durch Rekonstruktion eines Satzes (200) von mit dem Lichtfeldmikroskop (100) erhaltenen Teilbildern (201,..,289).

4. Verfahren nach einem der vorgenannten Ansprüche, wobei die Positionen in den Teilbildern der Lichtfelddaten berechnet werden, die mit den im dreidimensionalen Übersichtbild ausgewählten und zu analysierenden Probenpositionen korrespondieren.

5. Verfahren nach einem der Ansprüche 1 bis 4, wobei die Bilder (200) der Abfolge von Aufnahmezeitpunkten jeweils an einer Vielzahl von Positionen (a) gemäß den Schritten a) bis f) ausgewertet werden.

**6.** Verfahren nach einem der Ansprüche 1 bis 5, wobei durch einen Benutzer und/oder automatisch durch eine Auswerteeinheit (12) diejenigen Teilbilder (p1, p2, p3, p8, p9) ausgewählt werden, aus denen an den im Teilschritt c) bestimmten Positionen (a) die Bildsignale extrahiert werden.

**7.** Verfahren nach einem der Ansprüche 1 bis 6, wobei für die Auswahl der Teilbilder (p1, p2, p3, p8, p9), aus denen an den im Teilschritt c) bestimmten Positionen (a) die Bildsignale extrahiert werden, ein Satz von Teilbildern (201,..,289) eines mit dem Lichtfeldmikroskop (100) aufgenommenen Bilds (200) der Probe (5) teilweise oder vollständig graphisch dargestellt wird.

**8.** Verfahren nach Anspruch 7, wobei in der graphischen Darstellung, insbesondere von Ausschnitten (p1, .., p9) der Teilbilder, Integrationsbereiche zur Berechnung der integrierten Signale durch einen Benutzer, insbesondere unterstützt durch einen Segmentierungsalgorithmus, oder vollautomatisch durch einen Segmentierungsalgorithmus, graphisch definiert werden.

**9.** Verfahren nach einem der Ansprüche 1 bis 8,

wobei von den zu einer bestimmten Position (a) in Schritt f) ermittelten integrierten Signalen ein Minimalwert oder ein Startwert, insbesondere der für die ausgewerteten Bilder (200) der Abfolge von Aufnahmezeitpunkten erhaltene minimale Wert des integrierten Signals oder das für das zeitlich erste Bild erhaltene integrierte Signal, abgezogen wird oder wobei das integrierte Signal durch den Minimalwert oder den Startwert dividiert wird.

**10.** Verfahren nach einem der Ansprüche 1 bis 9, wobei eine zeitlich variierende Verschiebung von zu unterschiedlichen Aufnahmezeitpunkten aufgenommenen Bildern (200) der Probe (5) festgestellt wird, indem die zu unterschiedlichen Aufnahmezeitpunkten aufgenommenen Bildern (200) miteinander verglichen werden.

**11.** Verfahren nach Anspruch 10, wobei für den Vergleich von zu unterschiedlichen Aufnahmezeitpunkten aufgenommenen Bildern (200) für die zu vergleichenden Bilder (200) eine räumliche Korrelation berechnet wird.

**12.** Verfahren nach Anspruch 10 oder 11,

wobei für mindestens einen Aufnahmezeitpunkt, insbesondere für mehrere und insbesondere jeden Aufnahmezeitpunkt, für ein zu diesem Aufnahmezeitpunkt aufgenommenes Bild (200) ein Verschiebevektor relativ zu einem Referenzbild, beispielsweise dem letzten vor dem betreffenden Aufnahmezeitpunkt aufgenommenen Bild, ermittelt wird, und wobei der Satz von Teilbildern des Bilds (200) vor der Weiterverarbeitung durch den ermittelten Verschiebevektor korrigiert wird.

**13.** Verfahren nach einem der Ansprüche 1 bis 12, wobei für die Analyse von zeitlich variierenden Verschiebungen von zu unterschiedlichen Aufnahmezeitpunkten aufgenommenen Bildern (200) der Probe (5) jeweils eine Auswahl von günstigen Teilbildern, insbesondere von weniger als zehn, bevorzugt weniger als fünf und besonders bevorzugt zwei günstigen Teilbildern, ausgewertet werden.

**14.** Verfahren nach einem der Ansprüche 1 bis 13,

wobei bei zu unterschiedlichen Aufnahmezeitpunkten aufgenommenen Bildern (200) jeweils das zentrale Teilbild (245) analysiert wird, um Verschiebungen lateral zur optischen Achse zu festzustellen, und wobei ein Teilbild (221, 240) einer auf einem äußeren Ring, insbesondere am Rand, des Mikrolinsenarrays (9) liegenden Linse analysiert wird, um axiale Verschiebungen, insbesondere Verschiebungen parallel zur optischen Achse, zu erfassen.

**15.** Vorrichtung zur Lichtfeldmikroskopie

mit einem Lichtfeldmikroskop (100) mit einer Lichtquelle (1) zum Aussenden von Anregungslicht (2), einem Beleuchtungsstrahlengang mit mindestens einem Mikroskopobjektiv (4) zum Leiten des Anregungslichts (2) auf oder in eine Probe (5), mit einem zweidimensional ortsauflösenden Detektor (11) zum Nachweis von von der Probe (5) abgestrahltem Licht (6), mit einem Detektionsstrahlengang mit mindestens einem Mikrolinsenarray (9) zum Leiten von von der Probe (5) abgestrahltem Licht (6) auf den Detektor (11) und mit einer Steuer- und Auswerteeinheit (12) zum Ansteuern der Lichtquelle (1) und des Detektors (11) und zum Auswerten der von dem Detektor (11) erhaltenen Messdaten (200), wobei die Steuer- und Auswerteeinheit (12) dazu eingerichtet ist,

A) die Lichtquelle (1) und den Detektor (11) zur Aufnahme von Bildern (200) der Probe

(5) in einer Abfolge von Aufnahmezeitpunkten anzusteuern, wobei die Bilder (200) jeweils einen Satz von Teilbildern (201,..,289) umfassen;

B) in den Teilbildern (201,,..,289) der im Schritt A) aufgenommenen Bilder (200) Positionen (a) zu bestimmen, die von einem Benutzer oder maschinell in der Probe (5) ausgewählten Probenpositionen entsprechen;

C) mindestens aus einigen der Teilbilder (p1, p2, p3, p8, p9) an den im Teilschritt B) bestimmten Positionen (a) die Bildsignale zu extrahieren;

D) für einen bestimmten Aufnahmezeitpunkt ein integriertes Signal zu generieren, durch Aufintegrieren der im Schritt C) für eine bestimmte Position (a) aus Teilbildern dieses Aufnahmezeitpunkts extrahierten Bildsignale; und

E) den Schritt D) für eine Mehrzahl von Aufnahmezeitpunkten durchzuführen.

16. Vorrichtung nach Anspruch 15,
wobei das Mikrolinsenarray (9) in einer zur hinteren Pupille des Mikroskopobjektivs (4) optisch konjugierten Ebene (10) angeordnet ist.

**Claims**

1. Method for evaluating measurement data from a light field microscope, wherein the following steps are carried out:

a) at least one sample position to be analyzed is selected in a sample (5);
b) images (200) of the sample (5), which each comprise a set of partial images (201, ..., 289), are recorded at a sequence of recording times using a light field microscope (100);
c) the positions (a) corresponding to the selected sample positions are determined in the partial images (201, ..., 289) of the images (200) recorded in step b);
d) the image signals are extracted from at least some of the partial images (p1, p2, p3, p8, p9) at the positions (a) determined in partial step c);
e) an integrated signal is obtained for a certain recording time by virtue of the image signals extracted for a certain position (a) from partial images of this recording time in step d) being integrated to form the integrated signal; and
f) a time profile of the integrated signal is obtained by virtue of step e) being carried out for a plurality of recording times.

2. Method according to claim 1,

wherein the at least one sample position to be analyzed is selected by a user
from an overview image of the sample (5), in particular a two-dimensional or three-dimensional overview image of the sample, in particular an overview image of the sample that is already available;
on the basis of an observation of the sample using an eyepiece, and/or
on the basis of a 2D image obtained using an EDOF method or an objective having a large depth of field.

3. Method according to claim 2,

wherein the overview image of the sample (5) is obtained using a laser scanning microscope, or
wherein the overview image of the sample (5) is obtained using the light field microscope (100), in particular by reconstructing a set (200) of partial images (201, ..., 289) obtained by the light field microscope (100).

4. Method according to any one of the preceding claims,
wherein the positions in the partial images of the light field data that correspond to the sample positions which are selected in the three-dimensional overview image and which are intended to be analyzed are calculated.

5. Method according to any one of claims 1 to 4,
wherein the images (200) of the sequence of recording times are each evaluated at a multiplicity of positions (a) in accordance with steps a) to f).

6. Method according to any one of claims 1 to 5,
wherein the partial images (p1, p2, p3, p8, p9) from which the image signals are extracted at the positions (a) determined in partial step c) are selected by a user and/or automatically by an evaluation unit (12).

7. Method according to any one of claims 1 to 6,
wherein a set of partial images (201, ..., 289) of an image (200) of the sample (5) recorded by the light field microscope (100) is partly or completely represented graphically for the selection of partial images (p1, p2, p3, p8, p9) from which the image signals are extracted at the positions (a) determined in partial step c).

8. Method according to claim 7,
wherein integration regions for calculating the integrated signals are defined graphically by a user, in particular with assistance by a segmentation algorithm, or fully automatically by a segmentation algorithm in the graphical representation, in particular of portions (p1, ..., p9) of the partial images.

9. Method according to any one of claims 1 to 8,

   wherein a minimum value or a start value, in particular the minimum value of the integrated signal obtained for the evaluated images (200) from the sequence of recording times or the integrated signal obtained for the first image in time, is subtracted from the integrated signals determined for a certain position (a) in step f), or wherein the integrated signal is divided by the minimum value or the start value.

10. Method according to any one of claims 1 to 9, wherein a time-varying shift of images (200) of the sample (5) recorded at different recording times is determined by virtue of the images (200) recorded at different recording times being compared to one another.

11. Method according to claim 10, wherein a spatial correlation is calculated for the images (200) to be compared for the purposes of the comparison of images (200) recorded at different recording times.

12. Method according to claim 10 or 11,

    wherein a displacement vector relative to a reference image, for example the last image recorded prior to the relevant recording time, is determined for at least one recording time, in particular for a plurality of recording times and in particular for each recording time, for an image (200) recorded at this recording time, and wherein the set of partial images of the image (200) is corrected using the determined displacement vector prior to the further processing.

13. Method according to any one of claims 1 to 12, wherein a selection of advantageous partial images, in particular less than ten partial images, preferably less than five partial images and particularly preferably two partial images, is evaluated in each case for the analysis of time-varying shifts of images (200) of the sample (5) recorded at different recording times.

14. Method according to any one of claims 1 to 13,

    wherein the central partial image (245) is in each case analyzed for images (200) recorded at different recording times in order to determine lateral shifts with respect to the optical axis, and wherein a partial image (221, 240) from a lens located on an outer ring of the micro-lens array (9), in particular on the edge, is analyzed in order to detect axial displacements, in particular displacements parallel to the optical axis.

15. Apparatus for light field microscopy,

    comprising a light field microscope (100) comprising
    a light source (1) for emitting excitation light (2),
    an illumination beam path with at least one microscope objective (4) for guiding the excitation light (2) onto or into a sample (5),
    comprising a two-dimensionally spatially resolving detector (11) for detecting light (6) emitted by the sample (5),
    comprising a detection beam path with at least one micro-lens array (9) for guiding light (6) emitted by the sample (5) onto the detector (11), and
    comprising a control and evaluation unit (12) for controlling the light source (1) and the detector (11) and for evaluating the measurement data (200) obtained by the detector (11),
    wherein the control and evaluation unit (12) is configured

        A) to control the light source (1) and the detector (11) to record images (200) of the sample (5) in a sequence of recording times, the images (200) each comprising a set of partial images (201, ..., 289);
        B) to determine positions (a) in the partial images (201, ..., 289) of the images (200) recorded in step A), the positions corresponding to sample positions selected in the sample (5) by a user or by a machine;
        C) to extract the image signals from at least some of the partial images (p1, p2, p3, p8, p9) at the positions (a) determined in partial step B);
        D) to generate an integrated signal for a certain recording time by integrating the image signals extracted for a certain position (a) from partial images of this recording time in step C); and
        E) to carry out step D) for a plurality of recording times.

16. Apparatus according to claim 15, wherein the micro-lens array (9) is arranged in a plane (10) optically conjugate to the back pupil of the microscope objective (4).

## Revendications

1. Procédé d'exploitation de données de mesure d'un microscope à champ lumineux, dans lequel sont exécutées les étapes suivantes :

a) dans un échantillon (5) est sélectionnée au moins une position d'échantillon à analyser;

b) avec un microscope à champ lumineux (100) sont capturées dans une suite d'instants de capture des images (200) de l'échantillon (5) qui comprennent respectivement un jeu d'images partielles (201, ..., 289);

c) dans les images partielles (201, ..., 289) des images (200) capturées à l'étape b) sont déterminées les positions (a) qui correspondent aux positions d'échantillon sélectionnées ;

d) au moins à partir de certaines des images partielles (p1, p2, p3, p8, p9) sont extraits les signaux d'image, aux positions (a) déterminées à l'étape c);

e) pour un instant de capture déterminé est obtenu un signal intégré en ce que les signaux d'image extraits à l'étape d) pour une position (a) déterminée à partir d'images partielles de cet instant de capture sont intégrés par-dessus le signal intégré; et

f) un déroulement temporel du signal intégré est obtenu en ce que l'étape e) est exécutée pour une pluralité d'instants de capture.

2. Procédé selon la revendication 1,

dans lequel la au moins une position d'échantillon à analyser est sélectionnée par un utilisateur

à partir d'une image d'ensemble de l'échantillon (5), en particulier déjà présente, en particulier bidimensionnelle ou tridimensionnelle ;

à l'aide d'une observation de l'échantillon avec un oculaire et/ou

à l'aide d'une image 2D obtenue avec un procédé EDOF ou un objectif avec grande profondeur de champ.

3. Procédé selon la revendication 2,

dans lequel l'image d'ensemble de l'échantillon (5) est obtenue avec un microscope à balayage laser ou

dans lequel l'image d'ensemble de l'échantillon (5) est obtenue avec le microscope à champ lumineux (100), en particulier par reconstruction d'un jeu (200) d'images partielles (201, ..., 289) obtenues avec le microscope à champ lumineux (100).

4. Procédé selon l'une des revendications précédentes,

dans lequel sont calculées les positions dans les images partielles des données de champ lumineux qui correspondent aux positions d'échantillon sélectionnées dans l'image d'ensemble tridimensionnelle et à analyser.

5. Procédé selon l'une des revendications 1 à 4, dans lequel les images (200) de la suite d'instants de capture sont respectivement exploitées selon les étapes a) à f) en une pluralité de positions (a).

6. Procédé selon l'une des revendications 1 à 5, dans lequel sont sélectionnées par un utilisateur et/ou automatiquement par une unité d'exploitation (12) les images partielles (p1, p2, p3, p8, p9) dont sont extraits les signaux d'image aux positions (a) déterminées à l'étape c).

7. Procédé selon l'une des revendications 1 à 6, dans lequel, pour la sélection des images partielles (p1, p2, p3, p8, p9) dont sont extraits les signaux d'image aux positions (a) déterminées à l'étape c), un jeu d'images partielles (201, ..., 289) d'une image (200) de l'échantillon (5) capturée avec le microscope à champ lumineux (100) est représenté partiellement ou complètement graphiquement.

8. Procédé selon la revendication 7, dans lequel dans la représentation graphique, en particulier d'extraits (p1, ..., p9) des images partielles, des zones d'intégration pour le calcul des signaux intégrés sont définies graphiquement par un utilisateur, en particulier soutenu par un algorithme de segmentation, ou complètement automatiquement avec un algorithme de segmentation.

9. Procédé selon l'une des revendications 1 à 8,

dans lequel, à partir des signaux intégrés établis à l'étape f) pour une position (a) déterminée, est déduite une valeur minimale ou une valeur de départ, en particulier la valeur minimale du signal intégré obtenue pour l'image (200) exploitée de la suite d'instants de capture ou le signal intégré obtenu pour la première image temporelle, ou

dans lequel le signal intégré est divisé par la valeur minimale ou la valeur de départ.

10. Procédé selon l'une des revendications 1 à 9, dans lequel un décalage variant dans le temps d'images (200) de l'échantillon (5) capturées en des instants de capture différents est constaté en ce que les images (200) capturées en des instants de capture différents sont comparées entre elles.

11. Procédé selon la revendication 10, dans lequel, pour la comparaison d'images (200) capturées en des instants de capture différents, une corrélation spatiale est calculée pour les images (200) à comparer.

12. Procédé selon la revendication 10 ou 11,

dans lequel, pour au moins un instant de capture, en particulier pour plusieurs et en particulier pour chaque instant(s) de capture, un vecteur de décalage par rapport à une image de référence, par exemple la dernière image capturée avant l'instant de capture concerné, est établi pour une image (200) capturée à cet instant de capture, et

dans lequel le jeu d'images partielles de l'image (200) est corrigé avant le traitement ultérieur par le vecteur de décalage établi.

13. Procédé selon l'une des revendications 1 à 12, dans lequel, pour l'analyse de décalages variant dans le temps d'images (200) de l'échantillon (5) capturées à des instants de capture différents, sont respectivement exploitées une sélection d'images partielles avantageuses, en particulier de moins de dix, de préférence de moins de cinq, et particulièrement de préférence de deux images partielles avantageuses.

14. Procédé selon l'une des revendications 1 à 13,

dans lequel, pour des images (200) capturées en des instants de capture différents, l'image partielle centrale (245) est respectivement analysée pour constater des décalages latéralement à l'axe optique, et

dans lequel une image partielle (221, 240) d'une lentille se trouvant sur un anneau extérieur, en particulier au bord, du réseau de microlentilles (9), est analysée pour saisir des décalages axiaux, en particulier des décalages parallèles à l'axe optique.

15. Dispositif de microscopie à champ lumineux

avec un microscope à champ lumineux (100) avec

une source de lumière (1) pour l'émission d'une lumière d'excitation (2),

un trajet de faisceau d'éclairage avec au moins un objectif de microscope (4) pour le guidage de la lumière d'excitation (2) sur ou dans un échantillon (5),

avec un détecteur (11) à résolution locale bidimensionnel pour l'identification d'une lumière (6) irradiée par l'échantillon (5),

avec un trajet de faisceau de détection avec au moins un réseau de microlentilles (9) pour le guidage de la lumière (6) irradiée par l'échantillon (5) sur le détecteur (11) et

avec une unité de commande et d'exploitation (12) pour le pilotage de la source de lumière (1) et du détecteur (11) et pour l'exploitation des données de mesure (200) obtenues par le détecteur (11),

dans lequel l'unité de commande et d'exploitation (12) est aménagée pour

A) piloter la source de lumière (1) et le détecteur (11) pour la capture d'images (200) de l'échantillon (5) dans une suite d'instants de capture, dans lequel les images (200) comprennent respectivement un jeu d'images partielles (201, ..., 289) ;

B) déterminer dans les images partielles (201, ..., 289) des images (200) capturées à l'étape A) des positions (a) qui correspondent à des positions d'échantillon sélectionnées dans l'échantillon (5) par un utilisateur ou par une machine;

C) au moins à partir de certaines des images partielles (p1, p2, p3, p8, p9), extraire les signaux d'image aux positions (a) déterminées à l'étape partielle B);

D) pour un instant de capture déterminé, générer un signal intégré, par l'intégration par-dessus des signaux d'image extraits à l'étape C) d'images partielles de cet instant de capture pour une position (a); et

E) exécuter l'étape D) pour une pluralité d'instants de capture.

16. Dispositif selon la revendication 15, dans lequel le réseau de microlentilles (9) est agencé dans un plan (10) optiquement conjugué à la pupille arrière de l'objectif de microscope (4).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170205615 A1